# EUROPÄISCHE PATENTSCHRIFT

(11) **EP 2 335 951 B1**
(45) Veröffentlichungstag und Bekanntmachung des Hinweises auf die Patenterteilung: **27.06.2012**
(21) Anmeldenummer: 10189090.3
(22) Anmeldetag: 27.10.2010
(51) Int. Cl.: B60C 27/08, F16B 15/00

(54) **Fliehkraftverriegelungselement für Gleitschutzvorrichtungen**
Centrifugal lock element for anti-skid devices
Elément de verrouillage à force centrifuge pour dispositifs antidérapants

(30) Priorität: 21.12.2009 DE 102009059997
(43) Veröffentlichungstag der Anmeldung: 22.06.2011
(73) Patentinhaber: RUD Ketten Rieger & Dietz GmbH u. Co. KG, 73432 Aalen (DE)
(72) Erfinder: Grimm, Anton, 73479 Ellwangen-Rattstatt (DE)
(74) Vertreter: Grünecker, Kinkeldey, Stockmair & Schwanhäusser

(56) Entgegenhaltungen:
- US-A- 1 419 060
- US-A- 1 461 306

## Beschreibung

Die Erfindung betrifft ein Verriegelungselement für Gleitschutzvorrichtungen oder umlaufende Ketten wie Reifenketten oder Förderketten, mit einem Träger, der wenigstens ein Befestigungsorgan zur Befestigung wenigstens eines Anschlussgliedes umfasst, und mit einem beweglichen, am Träger angebrachten Sicherungsorgan, das von einer Befestigungsstellung, in der das Anschlussglied an dem Befestigungsorgan befestigbar ist, in eine Sicherungsstellung, in der das Anschlussglied nach Befestigung am Befestigungsorgan unverlierbar ist, überführbar ist

Aus dem Stand der Technik sind Verriegelungselemente für Gleitschutzvorrichtungen, Reifenketten oder Förderketten bekannt, die beispielsweise sehr langgestreckte Einführöffnungen für Anschlussglieder aufweisen, um ein versehentliches Lösen eines Anschlussgliedes zu verhindern. Des Weiteren werden für den Anschluss von Ketten Karabiner mit klappbaren oder verschraubbaren Sicherungsorganen verwendet.

Bei Gleitschutzvorrichtungen, die über ein Befestigungsorgan an einer Radschraube befestigt werden, werden Verriegelungselemente eingesetzt, um eine Halteeinrichtung in der Gleitschutzvorrichtung mit einer Radschraube zu verbinden. Derartige Gleitschutzvorrichtungen sind beispielsweise aus der EP 0 376 426 A1, EP 0 376 427 A1 und der noch nicht veröffentlichten Anmeldung der Anmelderin mit dem Aktenzeichen DE 10 2009 004 805.7 bekannt.

Des Weiteren werden Verriegelungselemente auch für die Verbindung bzw. den Verschluss von umlaufenden Ketten, beispielsweise Förderketten, verwendet.

Durch die US 1,461,306 A und die US 1,419,060 A sind bereits gattungsbildende Verriegetungselemente bekannt, bei denen die Sicherungsorgane durch Fliehkräfte in der Sicherungsstellung gehalten werden können.

Ein Nachteil der aus dem Stand der Technik bekannten Verriegelungselemente ist, dass das Anschließen der Verriegelungselemente sich umständlich und aufwendig gestaltet. So sind Einführöffnungen der Verriegelungselemente klein dimensioniert, um die Gefahr eines versehentlichen Lösens eines Anschlussgliedes zu verringern. Sicherungsorgane an den Verriegelungselementen müssen üblicherweise von Hand eingebracht werden.

Der vorliegenden Erfindung liegt folglich die Aufgabe zugrunde, ein Verriegelungselement zu schaffen, das bei gleichzeitig hoher Sicherheit der durch das Verriegelungselement hergestellten Verbindung zwischen Verriegelungselement und Anschlussglied einfach zu montieren ist.

Diese Aufgabe wird erfindungsgemäß für ein Verriegelungselement der eingangs genannten Art dadurch gelöst, dass das Sicherungsorgan durch während des Einsatzes des Verriegelungselementes auftretende Fliehkräfte von der Befestigungsstellung selbsttätig in die Sicherungsstellung überführbar ausgestaltet ist. Das Verriegelungselement bildet somit ein durch Fliehkräfte betätigbares Fliehkraftverriegelungselement.

Indem das Sicherungsorgan selbsttätig durch Fliehkräftevon der Befestigungsstellung in die Sicherungsstellung überführbar ist, erfolgt eine Sicherung eines angeschlossenen Anschlussgliedes automatisch, ohne dass der Benutzer das Sicherungsorgan betätigen muss. Somit ist bei einer hohen Zuverlässigkeit des Verriegelungselements eine einfache Bedienung gewährleistet. Des Weiteren ermöglicht das Sicherungsorgan eine vergrößerte Einführöffnung des Verriegelungselementes und somit eine zusätzliche Vereinfachung der Bedienung durch eine verbesserte Einführbarkeit des Anschlussgliedes.

Das erfindungsgemäße Fliehkraftverriegelungselement kann durch verschiedene, voneinander unabhängige, jeweils für sich vorteilhafte Ausgestaltungen weiter entwickelt werden. Auf diese Ausgestaltungen und die mit den Ausgestaltungen jeweils verbundenen Vorteile wird im Folgenden kurz eingegangen.

Um eine platzsparende Schwenkbewegung des Sicherungsorgans zu verwirklichen, kann das Sicherungsorgan drehbar an dem Fliehkraftverriegelungselement befestigt sein. Das Sicherungsorgan kann eine Massenverteilung aufweisen, die gegenüber einer Drehachse des Sicherungsorgans seitlich versetzt ist, wobei der Schwerpunkt des Sicherungsorgans durch die im Betrieb des Fliehkraftverriegelungselements auftretenden Fliehkräfte beweglich ausgestaltet ist.

Gemäß einer weiteren vorteilhaften Ausgestaltung des Fliehkraftverriegelungselements kann in der Sicherungsstellung eine Drehachse des Sicherungsorgans zwischen dem Schwerpunkt des Sicherungsorgans und einem Momentanpol des Fliehkraftverriegelungselements angeordnet sein. Somit kann eine bei umlaufendem Fliehkraftverriegelungselements auftretende Fliehkraft auf den Schwerpunkt des Sicherungsorgans wirken und ein um die Drehachse wirkendes Moment auf das Sicherungsorgan ausüben, welches das Sicherungsorgan in die Sicherungsstellung überführt.

In der Befestigungsstellung ist der Schwerpunkt des Befestigungsorgans vorzugsweise zweischen seiner Position in der Sicherungsstellung und dem Momentanpol angeordnet. Bei einer drehbaren Lagerung des Sicherungsorgans um eine Drehachse verbleibt somit ein Drehwinkelabschnitt, entlang dessen das Sicherungsorgan von der Befestigungsstellung in die Sicherungsstellung überführbar ist. Alternativ oder zusätzlich kann das Sicherungsorgan translatorisch oder geradlinig beweglich am Träger angebracht sein. Somit kann der Schwerpunkt des Sicherungsorgans zwischen seiner Position in der Sicherungsstellung und dem Momentanpol verschieblich angeordnet sein.

Gemäß einer weiteren vorteilhaften Ausgestaltung des Fliehkraftverriegelungselementes ist das Befestigungselement mit einer Einführöffnung zur Aufnahme des Anschlussgliedes versehen. Die Einführöffnung kann beispielsweise ösen- oder hakenförmig ausgestaltet oder von einem Schlitz gebildet sein. Alternativ kann die Einführöffnung lochartig mit einem kreisrunden, ovalen oder polygonen Profil ausgestaltet sein.

Um ein unbeabsichtigtes Lösen eines in die Einführöffnung aufgenommenen Anschlussgliedes zu verhindern, kann das Sicherungsorgan die Einführöffnung in der Sicherungsstellung wenigstens abschnittsweise verschließen. Vorzugsweise verschließt das Sicherungsorgan die Einführöffnung in einer Richtung, in der das Anschlussglied in die Einführöffnung einführbar ist. Das Anschlussglied kann bevorzugt in dem Befestigungsorgan und/oder der Einführöffnung in und/oder entgegen einer Einführrichtung geführt sein. Somit ist ausgeschlossen, dass sich das Anschlussglied in der Sicherungsstellung das Sicherungsorgan durch eine seitliche Bewegung überwinden kann.

Vorzugsweise ist in der Befestigungsstellung die Einführöffnung wenigstens abschnittsweise durch das Sicherungsorgan verschlossen. Die Größe oder die Abmessungen der Einführöffnung können etwa der Größe oder den Abmessungen des Anschlussgliedes entsprechen. Somit ist ein abschnittsweiser Verschluss der Einführöffnung durch das Sicherungsorgan ausreichend, um ein unbeabsichtigtes Herausgleiten des Anschlussgliedes aus der Einführöffnung zu verhindern.

Um bereits nach einer geringfügigen Bewegung des Sicherungsorgans eine sichere Befestigung eines Anschlussgliedes zu erreichen, kann das Sicherungsorgan eine Aussparung mit einem Innenprofil aufweisen, das wenigstens abschnittsweise einem Innenprofil der Einführöffnung entspricht und in der Befestigungsstellung mit der Einführöffnung fluchtet.

In einer weiteren vorteilhaften Ausgestaltung des Fliehkraftverriegelungselementes kann das Sicherungsorgan gegenüber dem Träger in einer Bewegungsrichtung beweglich angeordnet sein, wobei die Bewegungsrichtung im Wesentlichen quer zu einer Arretierrichtung verläuft, in welcher das Sicherungsorgan als Anschlag wirkt. Um beispielsweise bei einem drehbar am Träger befestigtem Sicherungsorgan sicherzustellen, dass das Sicherungsorgan nicht durch ein in das Befestigungsorgan aufgenommenes Anschlussglied von der Sicherungsstellung in die Befestigungsstellung bewegt wird, kann das Sicherungsorgan eine bogenförmige Anschlagfläche aufweisen. Die Anschlagfläche kann konvex und/oder konkav gekrümmt sein. Die Anschlagfläche kann vorzugsweise derart gekrümmt sein, dass ein Kontakt des Sicherungsorgans mit einem an dem Befestigungsorgan befestigten Anschlussglied an jedem Punkt der Anschlagfläche in eine Normalkraft resultiert, die das Sicherungsorgan in die Sicherungsstellung drückt.

Gemäß einer weiteren vorteilhaften Ausgestaltung des Fliehkraftverriegelungselementes kann das Befestigungselement hakenartig ausgestaltet sein. Das Befestigungselement kann einen Schlitz aufweisen, der in ein Hakenmaul mündet. Das Sicherungsorgan kann bei dieser Ausgestaltung quer zu einer Einführrichtung vor das Hakenmaul schwenkbar oder schiebbar ausgestaltet sein. Alternativ kann das Sicherungsorgan parallel zur Einführrichtung drehbar an dem Träger gelagert sein. Der Abstand zwischen Anschlagfläche und Drehachse des Sicherungsorgans kann sich in Richtung einer Winkelstellung oder eines Winkelbereichs des Sicherungsorgans, welcher der Sicherungsstellung entspricht, verringern. Somit kann sich das Sicherungsorgan unter Einwirkung des Anschlussgliedes in die Sicherungsstellung bewegen.

In einer weiteren vorteilhaften Ausgestaltung des Fliehkraftverriegelungselementes, in der das Fliehkraftverriegelungselement als Radialausgleichseinrichtung für eine Felgenanbindung einer Gleitschutzvorrichtung ausgestaltet sein kann, kann die Einführöffnung in einen Verschiebeschlitz münden, wobei die Einführöffnung gegenüber dem Verschiebeschlitz erweitert ist und ein Abschnitt des Verschiebeschlitzes als sich zur Einführöffnung erstreckende Ausgleichsstrecke ausgestaltet ist. Bei dieser Ausgestaltung des Fliehkraftverriegelungselements kann sich das Anschlussglied entlang der Ausgleichsstrecke ohne Einwirkung des Sicherungsorgans bewegen. Nur die Einführöffnung, welche die Aufnahme eines Anschlussgliedes oder die Demontage eines Anschlussgliedes ermöglicht, ist in der Sicherungsstellung durch das Sicherungsorgan blockiert.

Das Sicherungsorgan kann bevorzugt eine Begrenzung der Ausgleichsstrecke oder einen die Ausgleichsstrecke begrenzenden Anschlag bilden.

Das Sicherungsorgan kann im Sinne einer platzsparenden und materialsparenden Ausgestaltung flächenförmig oder plattenförmig ausgestaltet sein. Bei einem drehbar am Träger gelagerten Sicherungsorgan ist der Schwerpunkt des Sicherungsorgans vorzugsweise von einer Drehachse oder einem Drehpunkt des Sicherungsorgans beabstandet. Um ein möglichst großes, durch eine Fliehkraft erzeugtes, auf das Sicherungsorgan einwirkendes Drehmoment zu erreichen, kann der Drehpunkt oder die Drehachse des Sicherungsorgans randseitig an dem Sicherungsorgan angeordnet sein. Für einen großen Abstand zwischen Schwerpunkt und Drehachse kann ein Massenelement des Sicherungsorgans durch einen Hebel von der Drehachse beabstandet angeordnet sein.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine schematische perspektivische Darstellung eines ersten Ausführungsbeispiels der Erfindung;
- Fig. 2: eine schematische perspektivische Darstellung einer Gleitschutzvorrichtung mit erfin- dungsgemäßem Fliehkraftverriegelungselement;
- Fig. 3: eine Draufsicht eines erfindungsgemäßen Fliehkraftverriegelungselementes;
- Fig. 4: eine weitere Draufsicht eines erfindungsgemäßen Fliehkraftverriegelungselementes;
- Fig. 5: eine schematische perspektivische Ansicht eines zweiten Ausführungsbeispiels eines erfindungsgemäßen Fliehkraftverriegelungselementes in einer Befestigungsstellung;
- Fig. 6: eine schematische perspektivische Ansicht des zweiten Ausführungsbeispiels eines er- findungsgemäßen Fliehkraftverriegelungselementes in einer Sicherungsstellung;
- Fig. 7: eine schematische Seitenansicht eines dritten Ausführungsbeispiels eines erfindungs- gemäßen Fliehkraftverriegelungselementes in einer Sicherungsstellung;
- Fig. 8: eine schematische Seitenansicht eines vierten Ausführungsbeispiels eines erfindungs- gemäßen Fliehkraftverriegelungselementes in einer Befestigungsstellung.

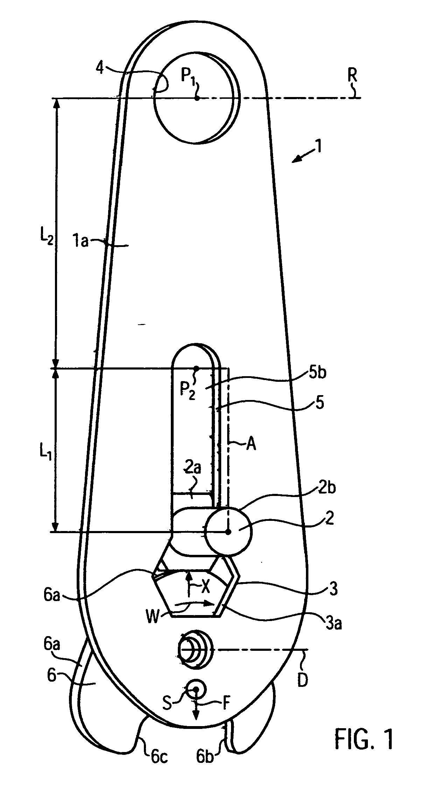

Zunächst wird der Aufbau eines erfindungsgemäßen Fliehkraftverriegelungselementes mit Bezug auf das Ausführungsbeispiel der Fig. 1 beschrieben.

Das Fliehkraftverriegelungselement der Fig. 1 dient der Befestigung einer Gleitschutzvorrichtung an einer Fahrzeugfelge. Um das Fliehkraftverriegelungselement 1 mit der (hier nicht gezeigten) Fahrzeugfelge zu verbinden, ist ein Anschlussglied 2 vorgesehen, das beispielhaft als Bolzen ausgestaltet und vorzugsweise bereits vor Befestigung der Gleitschutzvorrichtung mit der Felge verbunden ist. Das Anschlussglied 2 kann durch eine Einführöffnung 3 in einem Träger 1a des Fliehkraftverriegelungselementes 1 eingesetzt werden.

Das Anschlussglied 2 ist mit einem als Polygonaußenprofil ausgestaltetem Außenprofil 2a versehen, das beispielsweise dem Profil eines Kopfes einer Sechskantschraube entsprechen kann. Die Einführöffnung 3 weist hingegen ein Innenprofil 3a auf, das beispielhaft als Polygoninnenprofil ausgestaltet ist und dessen Abmessungen nur geringfügig größer als die des Außenprofils 2a sind. Das Polygonaußenprofil 2a des Anschlussgliedes 2 kann somit bei einer Ausrichtung nach dem Polygoninnenprofil 3a in die Einführöffnung 3 eingesetzt werden, während das Anschlussglied 2 auch nach einem geringfügigen Verdrehen des Polygonaußenprofils 2a gegenüber dem Polygoninnenprofil 3a auf dem Rand der Einführöffnung 3 aufliegt. Die Wahrscheinlichkeit eines versehentlichen Lösens des Anschlussgliedes 2 von dem Fliehkraftverriegelungselement 1 ist somit verringert.

Das Fliehkraftverriegelungselement 1 weist eine Halteöffnung 4 auf, die der Befestigung einer Gleitschutzvorrichtung dient. Beispielsweise kann durch die Halteöffnung 4 ein Spannorgan oder Spannstrang einer Gleitschutzvorrichtung befestigt werden.

Bei montierter Gleitschutzvorrichtung ist zentrisch in der Halteöffnung 4 ein Spannorgan der Gleitschutzvorrichtung angeordnet. Die Halteöffnung 4 ist bei montierter Gleitschutzvorrichtung konzentrisch zu einer Radachse R angeordnet, die senkrecht zur Ebene des Diehkraftverriegelungselements 1 verläuft und um die sich das Fliehkraftverriegelungselement 1 zusammen mit dem Fahrzeugrad dreht. Das Fliehkraftverriegelungselement 1 dreht sich somit um einen Momentanpol P₁, der bei der Ausgestaltung der Fig. 1 auf der Radachse R liegt. Gemäß weiteren Ausführungsformen des Fliehkraftverriegelungselementes 1 kann der Momentanpol P₁ von dem Fliehkraftverriegelungselement 1 beabstandet angeordnet sein.

Das Fliehkraftverriegelungselement 1 ist als Radialausgleichseinrichtung ausgestaltet, die eine Zentrierung eines an der Halteöffnung 4 befestigten Spannstrangs gegenüber einem Fahrzeugrad ermöglicht. Für diesen radialen Ausgleich ist ein schlitzartiges Befestigungsorgan 5 vorgesehen, das einen Verschiebeschlitz 5b bildet, der das Anschlussglied 2 entlang einer Ausgleichsstrecke A führt. Die Ausgleichsstrecke A hat eine Länge L₁, innerhalb derer das als Radialausgleichselement ausgestaltete Fliehkraftverriegelungselement in radialer Richtung gegenüber einem mit dem Fliehkraftverriegelungselement 1 verbundenen Fahrzeugrad verschoben werden kann. An dem der Einführöffnung 3 gegenüberliegenden Ende der Ausgleichsstrecke A liegt der Mittelpunkt des Anschlussgliedes 2 am Punkt P₂ der Fig. 1. Der Punkt P₂ weist einen Abstand L₂ vom Punkt P₁ auf, der in etwa dem Radius des Lochkreises der Felge entspricht. Bei dieser Dimensionierung ist sichergestellt, dass das in der Halteöffnung 4 angebrachte Spannorgan nach Anbringung des Anschlussgliedes 2 mit der Radachse R fluchtet.

Das Fliehkraftverriegelungselement 1 ist in einer Befestigungsstellung gezeigt, in der ein unbeabsichtigtes Lösen des Anschlussgliedes 2 von dem Fliehkraftverriegelungselement 1 durch ein Sicherungsorgan 6 verhindert ist. Das Sicherungsorgan 6 ist gegenüber dem Träger 1a in einer Bewegungsrichtung W beweglich angeordnet ist, wobei die Bewegungsrichtung W im Wesentlichen quer zu einer Arretierrichtung X verläuft, in welcher das Sicherungsorgan 6 als Anschlag wirkt. Das Sicherungsorgan 6 ist im Wesentlichen scheibenförmig ausgestaltet und um eine Drehachse D drehbar an dem Fliehkraftverriegelungselement 1 befestigt. Das Sicherungsorgan 6 befindet sich in einer Sicherungsstellung, in der das Anschlussgliedes 2 nicht über die Länge L₁ der Ausgleichsstrecke A hinaus in Richtung der Einführöffnung 3 verschoben werden kann. Um ein Verschieben des Anschlussglied 2 in die Einführöffnung 3 zu verhindern, bildet das Sicherungsorgan 6 in der gezeigten Befestigungsstellung einen Anschlag, der den Schlitz 5 beziehungsweise die Ausgleichsstrecke A in Richtung der Einführöffnung 3 begrenzt. Hierzu weist das Sicherungsorgan 6 eine bogenförmige Anschlagfläche 6a auf, die in der gezeigten Position des Anschlussgliedes 2, in der das Anschlussglied 2 in Richtung der Einführöffnung 3 bis an das Ende der Ausgleichsstrecke A verschoben ist, an das Anschlussglied 2 stößt.

Um das Anschlussglied 2 montieren zu können, ist das Sicherungsorgan 6 mit einer Aussparung 6b versehen, die in einer Befestigungsstellung des Sicherungsorgans 6 die Einführöffnung 3 umgibt. Die Innenkontur der Aussparung 6b kann etwa der Innenkontur der einführöffnung 3 entsprechen. Beispielsweise kann die Innenkontur der Aussparung 6b 3 ein polygonartiges Innenprofil 6c bilden, das zumindest abschnittsweise dem Innenprofil 3a der Einführöffnung 3 entspricht. Vorzugsweise ist der Innendurchmesser der Aussparung 6b etwa so groß oder größer als der Innendurchmesser der Aussparung 3, so dass nach einem Ausrichten der Aussparung 6b nach der Einführöffnung 3 das Außenprofil 2a des Anschlussgliedes 2 in die Einführöffnung 3 eingeführt werden kann. Ein bolzenförmiger Abschnitt 2b des Anschlussgliedes 2 ist vorzugsweise bereits vor der Montage des Fliehkraftverriegelungselementes 1 mit dem Fahrzeugrad verbunden. Das Anschlussglied 2 kann beispielsweise mit einem Radbolzen verbunden sein oder einen Radbolzen bilden. Bei bereits an dem Fahrzeug vormontiertem Anschlussglied 2 kann das Fliehkraftverriegelungselement 1 somit auf einfache Weise mit dem Fahrzeugrad verbunden werden.

Das Sicherungsorgan 6 befindet sich in einer Sicherungsstellung, in der die Einführöffnung 3 wenigstens abschnittsweise verschlossen ist. In dieser Stellung des Sicherungsorgans 6 ist ein Schwerpunkt S des Sicherungsorgans 6 auf einer dem Anschlussglied 2 abgewandten Seite der Einführöffnung 3 angeordnet.

Durch die Drehung des Fliehkraftverriegelungselementes 1 um die Radachse R entsteht eine Zentrifugalkraft oder Fliehkraft F, die auf den Schwerpunkt S des Sicherungsorgans 6 einwirkt. Da der Schwerpunkt S außerhalb der Drehachse D des Sicherungsorgans 5 angeordnet ist, wird das Fliehkraftverriegelungselement 1 während des Betriebs der Gleitschutzvorrichtung beziehungsweise einer Drehung um die Radachse R in die in Fig. 1 gezeigte Sicherungsstellung bewegt oder in dieser Sicherungsstellung gehalten.

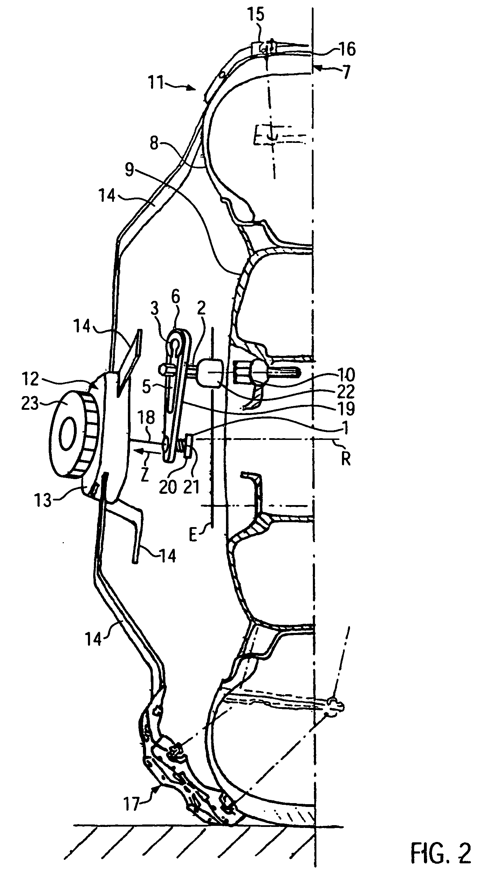

Fig. 2 zeigt eine Teilansicht einer Gleitschutzvorrichtung mit einem erfindungsgemäßen Fliehkraftverriegelungselement während des Anlegens an ein Fahrzeugrad.

Ein Fahrzeugrad 7, das einen Reifen 8 und eine Felge 9 umfasst, ist durch eine Felgenbefestigung 10, z.B. Radschrauben, um die Radachse R drehbar an einer hier nicht dargestellten Fahrzeugachse befestigt. Die gezeigte Radschraube 10 ist eine herkömmliche Radschraube, deren sechskantförmiger Schraubenkopf über das Anschlussglied 2 durch eine Klemmverbindung mit der Gleitschutzvorrichtung 11 verbunden werden kann. Alternativ kann eine der Radschrauben 10 als Spezialschraube ausgestaltet sein, die das Anschlussglied 2 umfasst und somit den Anschluss der Gleitschutzvorrichtung 11 an das Fahrzeugrad 7 ermöglicht.

Die Gleitschutzvorrichtung 11 ist mit einer in montiertem Zustand zentrisch zum Fahrzeugrad 7 angeordneten Halteeinrichtung 12 versehen. In einer zentralen Halterung 13 der Halteeinrichtung 12 sind vier als Haltearme ausgestaltete Halter 14 eingesetzt, deren der Halterung 13. abgewandte Enden gelenkig mit Gleitschutzelementen 15 verbunden sind. Die Gleitschutzetemente 15 sind Teile eines die Lauffläche 16 des Reifens 8 bedeckenden Laufnetzes 17.

Das Laufnetz 17 wird bei montierter Gleitschutzvorrichtung 11 durch die Halter 14 auf der Lauffläche 16 gehalten, ohne dass weitere Befestigungselemente, wie beispielsweise Seitenketten, benötigt werden. Um die Halter 14 in Richtung des Fahrzeugrades 7 zu drücken und damit den Verbleib des Laufnetzes 17 auf dem Fahrzeugrad 7 sicherzustellen, kann die Halterung 13 ein Spannmittel 18 umfassen, das vorzugsweise zentral an der Halterung 13 angeordnet ist und im montierten Zustand die Halterung 13 konzentrisch zur Radachse R in Richtung der Felge 9 zieht.

Die Gleitschutzvorrichtung 11 ist in einer Montageposition dargestellt, in der die Gleitschutzvorrichtung 11 noch nicht vollständig montiert ist. Zur Befestigung der Halterung 13 an der Felge 9 ist diese mit dem Fliehkraftverriegelungselement 1 verbunden. Das Fliehkraftverriegelungselement 1 ist Teil einer Befestigungseinrichtung 19, die das Anschlussglied 2, ein Kupplungsorgan 20 sowie ein das Kupplungsorgan 20 und das Anschlussglied 2 verbindendes Fliehkraftverriegelungselement 1 umfasst. Das Fliehkraftverriegelungselement 1 ist in montiertem Zustand der Gleitschutzvorrichtung 11 in einer quer zur Radachse R verlaufenden Ebene E angeordnet, die aufgrund der Seitenansicht als Linie dargestellt ist. In montiertem Zustand des Fliehkraftverriegelungselementes fluchtet das Spannmittel 18 vorzugsweise mit der Radachse R. Das Sicherungsorgan 6 ist hingegen vorzugsweise von der Radachse R beabstandet positioniert, so dass sich das Sicherungselement 6 während des Einsatzes der Gleitschutzvorrichtung 11 um die Radachse R dreht.

Das Kupplungsorgan 20 ist als federgespannter Bolzen ausgeführt, wobei sich das Kupplungsorgan 20 parallel zur Radachse R verschieben kann. Eine Schraubenfeder 21 drückt das in dem Fliehkraftverriegelungselement 1 verschieblich angeordnete Kupplungsorgan 20 in Richtung der Felge 9. Indem die Schraubenfeder 21 insbesondere bei ruckartigen Bewegungen oder Vibrationen der Halter 14 elastisch nachgibt, werden Bewegungen der Gleitschutzvorrichtung 11 während der Fahrt gedämpft und somit die Laufruhe verbessert.

Um eine Zentrierung der Halterung 13 gegenüber dem Fahrzeugrad 7 zu ermöglichen, ist das Anschlussglied 2 in montiertem Zustand in Richtung der Längserstreckung des Fliehkraftverriegelungselementes 1 verschiebbar mit dem Fliehkraftverriegelungselement 1 verbunden. Für den Ausgleich von Relativbewegungen, insbesondere Drehungen des Laufnetzes 17 gegenüber dem Fahrzeugrad 7 ist außerdem das Kupplungsorgan 20 in dem Fliehkraftverriegelungselement 1 drehbar gelagert.

Die Halterung 13, das Spannmittel 18, das Kupplungsorgan 20 und das Fliehkraftverriegelungselement 1 sind unverlierbar miteinander verbunden. Das Anschlussglied 2 kann hingegen im Sinne einer einfachen Montage der Gleitschutzvorrichtung von Hand in das Fliehkraftverriegelungselement 1 eingeführt oder von diesem gelöst werden. Vorzugsweise wird das Anschlussglied 2 vor der Montage der Halterung 13 an dem Fahrzeugrad 7 an dem Kopf einer Radschraube 10 befestigt. Anschließend kann das Fliehkraftverriegelungselement 1 mit dem Anschlussglied 2 verbunden werden, indem das Anschlussglied 2 in die Einführöffnung 3 des Fliehkraftverriegelungselementes 1 eingeführt wird. Um die Halterung 13 gegenüber der Radachse R auszurichten, kann anschließend das Fliehkraftverriegelungselement 1 gegenüber dem Anschlussglied 2 verschoben werden und somit das Anschlussglied 2 in den Schlitz 5 hineinbewegt werden. Während des Betriebes wird die Einführöffnung 3 in Richtung des Schlitzes 5 verschlossen, indem das Sicherungsorgan 6 aufgrund der auf das Sicherungsorgan 6 einwirkenden Fliehkräfte in eine Sicherungsstellung überführt beziehungsweise gedreht wird.

Das Anschlussglied 2 ist mit einem Klemmorgan 22 verbunden, in dessen im Wesentlichen glockenförmiges Gehäuse der Kopf einer Radschraube 10 eingeführt werden kann. Das Klemmorgan 22 ermöglicht eine kraftschlüssige Verbindung mit der Radschraube, indem durch Verdrehen des Polygonaußenprofils des Anschlussgliedes 2 in dem Klemmorgan 22 angeordnete Klemmflächen in Richtung der Außenflächen des Schraubenkopfes der Radschraube 10 bewegt werden, bis ein Kraftschluss entsteht.

Außerhalb der Aufstandsfläche des Fahrzeugrades 7 ist bereits ein Abschnitt des Laufnetzes 17 aufgelegt, während das Laufnetz im Bereich der Bodenaufstandsfläche noch neben dem Fahrzeugrad positioniert ist. Nach dem Verbinden des Anschlussgliedes 2 mit der Radschraube 10 kann der Benutzer über ein Betätigungsorgan 23, das beispielhaft als Drehknopf ausgebildet ist, das Spannmittel 18 spannen und in einer Spannstellung arretieren. Über den Drehknopf wird eine das Spannmittel 18 aufwickelnde Spannrolle betätigt. Die Spannrolle kann in einer Spannposition beispielsweise durch einen Ratschenmechanismus arretiert sein. Die Vorspannung des Spannmittels 18 wird durch die Halter 14 und durch die Schraubenfeder 21 des Kupplungsorgans 20 sichergestellt. Die als Haltearme ausgestalteten Halter 14 sind durch bei montierter Gleitschutzvorrichtung 11 durch die über das Spannmittel 18 übertragene Zugkraft Z elastisch verformt oder gebogen und erhalten dadurch auch Bewegungen der Gleitschutzvorrichtung 11 gegenüber dem Fahrzeugrad die Vorspannung des Spannmittels 18, das die Halterung 13 permanent in Richtung des Fahrzeugrades 7 drückt und somit das Laufnetz 17 auf der Lauffläche 16 des Reifens hält.

Sobald die Halterung 13 über das Fliehkraftverriegelungselement 1 und das Klemmorgan 22 mit dem Fahrzeugrad 7 verbunden und das Spannmittel 18 vorgespannt ist, sind keine weiteren Montagetätigkeiten notwendig. Sobald das Fahrzeugrad 7 anrollt, wird die Halterung 13 durch die Spannung des Spannmittels 18 fortwährend in Richtung der Felge 9 gezogen und somit auch der zuvor an der Bodenaufstandsfläche des Fahrzeugrades 7 zu liegen gekommene Abschnitt des Laufnetzes 17 auf die Lauffläche 16 des Reifens 8 gezogen.

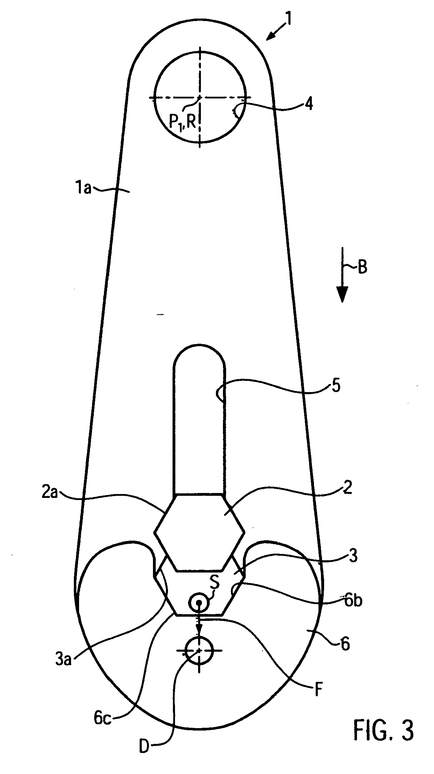

Fig. 3 ist eine schematische Draufsicht auf ein erfindungsgemäßes Fliehkraftverriegelungselement 1. Das Fliehkraftverriegelungselement 1 ist in einer Befestigungsstellung des Fliehkraftverriegelungselement 1 beziehungsweise des Sicherungsorgans 6 gezeigt, in der die Einführöffnung 3 freigegeben ist. Die Aussparung 6b des Sicherungsorgans 6 fluchtet mit der Einführöffnung 3a und verengt somit nicht die Größe der Einführöffnung 3a. Alternativ kann der Rand der Aussparung 6b auch benachbart und außerhalb der Einführöffnung 3a angeordnet sein. Das Sicherungsorgan des Ausführungsbeispiels der Fig. 3 weist eine Aussparung 6b mit einem Polygoninnenprofil 6c auf, das abschnittsweise dem Polygoninnenprofil 3a der Einführöffnung 3 entspricht. Somit kann das Anschlussglied 2, das ein im Wesentlichen sechskantförmiges Polygonaußenprofil aufweist, in die Einführöffnung 3 eingeführt werden. Auch ein nur geringfügiges Verdrehen des Sicherungsorgans 6 führt hingegen zu einer Überlagerung der Polygoninnenprofile 3a und 6c und somit zu einer Verkleinerung der Einführöffnung 3, die ein unbeabsichtigtes Herausfallen des Anschlussgliedes 2 aus dem Fliehkraftverriegelungselement 1 verhindert.

Während des Einsatzes der in Fig. 2 gezeigten Gleitschutzvorrichtung rotiert das Fliehkraftverriegelungselement 1 um seinen Momentanpol P₁, der von der Radachse R gebildet ist. Durch die Drehung des Fliehkraftverriegelungselementes 1 um den Momentanpol P₁ oder die Radachse R tritt eine Fliehkraft F auf, die auf das Sicherungsorgan 6 wirkt und den Schwerpunkt S des Sicherungsorgans 6 in eine Fliehkraftrichtung B drückt. Nach einem ersten leichten Verdrehen des Sicherungsorgans 6, das beispielsweise durch Vibrationen am fahrzeugrad auftreten kann, dreht sich das Sicherungsorgan 6 in Fliehkraftrichtung B nach außen in die Sicherungsstellung.

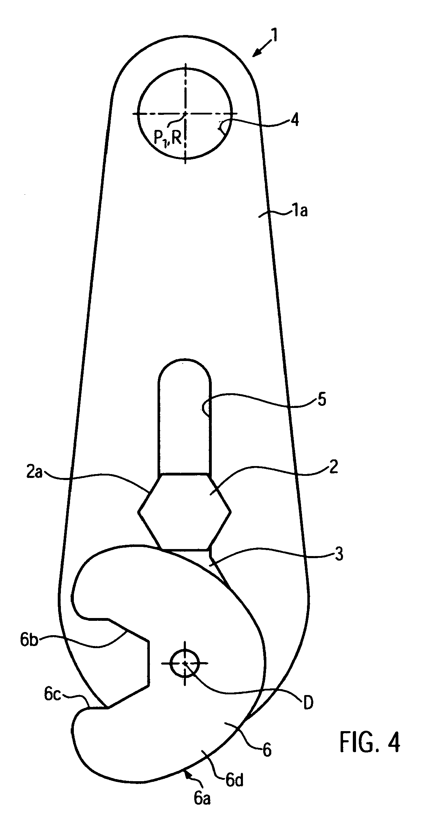

Fig. 4 ist eine weitere schematische Draufsicht auf das Fliehkraftverriegelungselement 1, wobei sich das Sicherungsorgan 6 in einer möglichen Position der Sicherungsstellung befindet. Die Anschlagfläche 6a des Sicherungsorgans 6 verläuft entlang einer Außenkontur 6d des Sicherungsorgans 6, deren Verlauf dem Verlauf einer quadratischen Funktion gleicht. Der Abstand der Anschlagfläche 6a zur Drehachse D verkleinert sich in Richtung des Scheitelpunktes der quadratischen Funktion, der auf einer der Aussparung 6b bezüglich der Drehachse D gegenüberliegenden Seite des Sicherungsorgans 6 angeordnet ist. Somit ist sichergestellt, dass das Anschlussglied 2, sobald es auf die Anschlagfläche 6a trifft, das Sicherungsorgan 6 in Richtung der Sicherungsstellung drückt beziehungsweise in der Sicherungsstellung hält. Die Anschlagfläche 6a kann auf der der Aussparung 6b gegenüberliegenden Seite abschnittsweise kreisförmig verlaufen, wobei in dem kreisförmigen Abschnitt der Abstand der Anschlagfläche 6a zum Drehpunkt D gleichbleibend ist. Ein kreisförmiger Abschnitt der Anschlagfläche 6a oder der Außenkontur 6d definiert somit einen Drehwinkelbereich des Sicherungsorgans 6, innerhalb dessen ein Kontakt mit dem Anschlussglied 2 zu keiner Drehung des Sicherungsorgans 6 führt.

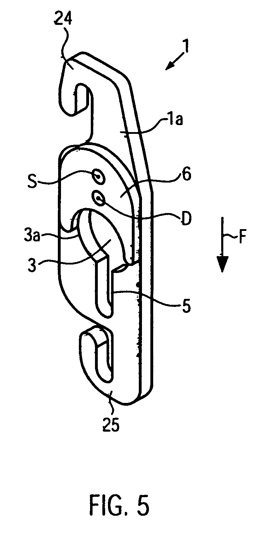

Fig. 5 zeigt ein weiteres Ausführungsbeispiel eines erfindungsgemäßen Fliehkraftverriegelungselementes, wobei für Elemente, die in Funktion und Aufbau den Elementen des Ausführungsbeispiels der Fig. 1 bis 4 entsprechen, dieselben Bezugszeichen verwendet werden. Der Kürze halber wird auf die Unterschiede zu dem vorangegangenen Ausführungsbeispiel eingegangen. Der Träger 1 a des Fliehkraftverriegelungselementes 1 umfasst neben einem als Schlitz ausgestalteten Befestigungselement 5 zwei als Haken ausgestaltete Befestigungselemente 24 und 25, in die Kettenglieder eingehängt werden können. Die Einführöffnung 3 ist mit einem kreisförmigen Innenprofil 3a versehen, welches ein Durchführen eines Kettenstrangs, beispielsweise eines Spannstrangs einer Gleitschutzkette ermöglicht. Nach dem Einführen eines Kettenstrangs in die Einführöffnung 3 können Längsschenkel eines Kettengliedes in das als Schlitz ausgestaltete Befestigungselement 5 eingeführt werden. Anschließend kann das Sicherungsorgan 6 per Fliehkraft betätigt oder von Hand verdreht werden, bis die Einführöffnung 3 wenigstens abschnittsweise verschlossen ist und somit ein Herausrutschen eines Kettengliedes aus dem Befestigungselement 5 vermieden wird.

In Fg. 6 ist das Fliehkraftverriegelungselement der Fig. 5 mit eingehängten Kettengliedern 26, 27 beziehungsweise in das Befestigungselement 5 eingeführtem Kettenstrang 28 gezeigt. Das Sicherungsorgan 6 befindet sich in einer Sicherungsstellung, in der ein Anschlussglied 28a des Kettenstrangs 28 an dem Befestigungselement 5 befestigt und durch das Sicherungsorgan 6 gesichert ist.

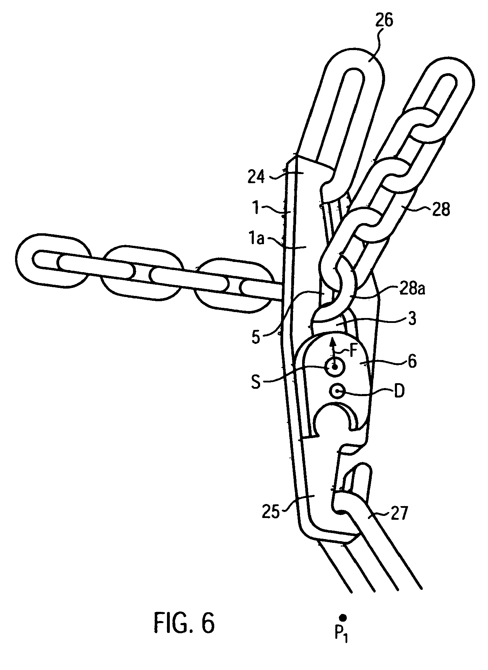

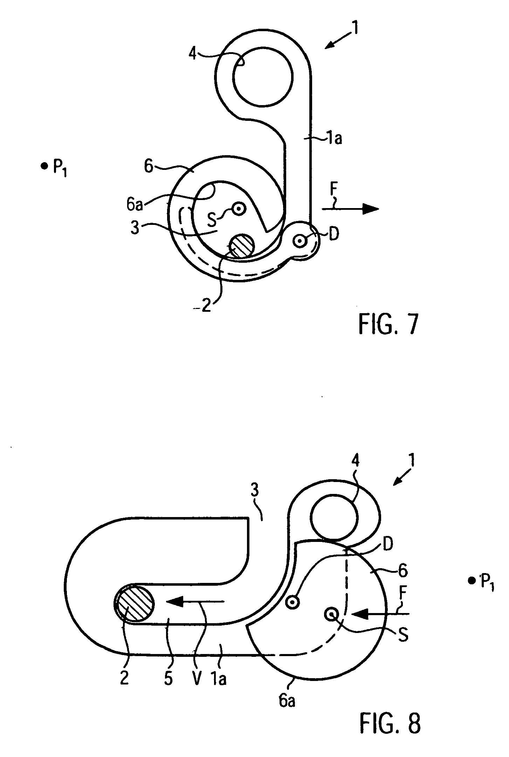

Alternativ zu den oben beschriebenen Ausführungsbeispielen von Fliehkraftverriegelungselementen kann das Befestigungselement hakenförmig ausgestaltet sein. Ein fliehkraftbetätigtes Sicherungsorgan kann an dem Hakenmaul angeordnet sein und das Hakenmaul in einer Sicherungsstellung wenigstens abschnittsweise verschließen. Eine derartige Ausführungsform zeigt Fig. 7, wobei für Elemente, die in Funktion und Aufbau den Elementen der vorhergehenden Figuren entsprechen, dieselben Bezugszeichen verwendet werden. Der Kürze halber wird auf die Unterschiede zu den Ausführungsbeispielen der Fig. 1 bis 6 eingegangen.

Das Befestigungsorgan 5 des Fliehkraftverriegelungselements 1 ist hakenförmig ausgestaltet. Auch das Sicherungsorgan 6 weist eine im Wesentlichen haken- oder sichelförmige Gestaltung auf. Ein durch das hakenförmige Befestigungsorgan 5 durch die Einführöffnung 3 aufgenommenes Anschlussglied 2 ist in der gezeigten Sicherungsstellung des Sicherungsorgans 6 in dem Befestigungsorgan 5 gesichert. Aufgrund der konkaven Innenkontur des Sicherungsorgans 6 führt auch ein Verschieben des Anschlussgliedes gegen das Sicherungsorgan 6 in der Sicherungsstellung nicht zu einem Öffnen des Sicherungsorgans 6. Einander zugeordnete Haltefortsätze 6e des Sicherungsorgans und Haltefortsätze 5a des Befestigungsorgans 5 treffen in einer Befestigungsstellung des Sicherungsorgans 6 aufeinander und verhindern somit ein zu weites Aufklappen des Sicherungsorgans 6. Der Schwerpunkt S des Sicherungsorgans 6 bleibt somit in jeder Stellung des Sicherungsorgans 6 oberhalb der Drehachse D, so dass eine auf den Schwerpunkt S wirkende Fliehkraft F das Sicherungsorgan 6 in die gezeigte Sicherungsstellung überführt.

Fig. 8 zeigt ein viertes Ausführungsbeispiel, wobei für Elemente, die in Funktion und Aufbau den Elementen der vorhergehenden Ausführungsbeispiele entsprechen, dieselben Bezugszeichen verwendet werden.

Das Befestigungsorgan 5 ist schlitzförmig ausgestaltet, wobei ein beispielsweise bolzenförmig ausgestaltetes Anschlussglied 2, das in Fig. 8 in Schnittdarstellung dargestellt ist, durch die Einführöffnung 3 in das schlitzförmige Befestigungsorgan 5 gelangt. Ein im Wesentlichen scheibenförmiges Sicherungsorgan, das in Fig. 8 in der Befestigungsstellung gezeigt ist, wird bei einer umlaufenden Bewegung des Fliehkraftverriegelungselements 1 um einen Momentanpol P₁, der vorzugsweise rechtsseitig des Fliehkraftverriegelungselements 1 angeordnet ist, durch eine Fliehkraft F in eine Sicherungsstellung überführt. In der Sicherungsstellung ist das schlitzförmige Befestigungsorgan 5 abschnittsweise durch das Sicherungsorgan 6 verdeckt, so dass ein in das schlitzförmige Befestigungsorgan 5 eingeführtes Anschlussglied 2 bei einer Verschiebung in Richtung der Einführöffnung 3 das Anschlussglied 2 an die Anschlagfläche 6a des Sicherungsorgans 6 stößt. Das Anschlussglied 2 ist bevorzugt in dem Befestigungsorgan 5 in und entgegen einer Einführrichtung V geführt. Somit ist ausgeschlossen, dass das Anschlussglied 2 in der Sicherungsstellung das Sicherungsorgan 6 durch eine seitliche Bewegung überwinden kann.

In einer weiteren Ausführungsform des Fliehkraftverriegelungselementes 1 kann das Sicherungsorgan mit einem Fixierelement versehen sein, um das Sicherungsorgan in der Sicherungsstellung zu fixieren, auch wenn zwischenzeitlich keine Fliehkräfte auf das Sicherungsorgan wirken. Das Fixierelement kann beispielsweise als Verrastung ausgestaltet sein, die das Sicherungsorgan in der Sicherungsstellung mit dem Träger verrastet.

Das erfindungsgemäße Fliehkraftverriegelungselement kann überall dort eingesetzt werden, wo eine Fliehkraft erzeugt wird. Beispielsweise auch in Fördereinrichtungen.

## Patentansprüche

1. Fliehkraftverriegelungselement (1) für Gleitschutzvorrichtungen oder umlaufende Ketten wie Reifenketten oder Förderketten, mit einem Träger (1a), der wenigstens ein Befestigungsorgan (5) zur Befestigung wenigstens eines Anschlussgliedes (2) umfasst, und mit einem beweglichen, am Träger (1 a) angebrachten Sicherungsorgan (6), das von einer Befestigungsstellung, in der das Anschlussglied (2) an dem Befestigungsorgan (5) befestigbar ist, in eine Sicherungsstellung, in der das Anschlussglied (2) nach Befestigung am Befestigungsorgan (5) unverlierbar ist, überführbar ist, **dadurch gekennzeichnet, dass** das Sicherungsorgan (6) durch während des Einsatzes des Fliehkraftverriegelungselements (1) auftretende Fliehkräfte (F) von der Befestigungsstellung selbsttätig in die Sicherungsstellung überführbar ausgestaltet ist.

2. Fliehkraftverriegelungselement (1) nach Anspruch 1, **dadurch gekennzeichnet, dass** das Sicherungsorgan (6) drehbar an dem Fliehkraftverriegelungselement (1) befestigt ist.

3. Fliehkraftverriegelungselement (1) nach Anspruch 1 oder 2, **dadurch gekennzeichnet, dass** in der Sicherungsstellung eine Drehachse (D) des Sicherungsorgans (6) zwischen dem Schwerpunkt (S) des Sicherungsorgans (6) und einem Momentanpol (P₁) des Fliehkraftverriegelungselementes (1) angeordnet ist.

4. Fliehkraftverriegelungselement (1) nach einem der Ansprüche 1 bis 3, **dadurch gekennzeichnet, dass** in der Befestigungsstellung der Schwerpunkt (S) zwischen seiner Position in der Sicherungsstellung und dem Momentanpol (P₁) angeordnet ist.

5. Fliehkraftverriegelungselement (1) nach einem der Ansprüche 1 bis 4, **dadurch gekennzeichnet, dass** das Befestigungsorgan (2) eine Einführöffnung (3) zur Aufnahme des Anschlussgliedes (2) aufweist.

6. Fliehkraftverriegelungselement (1) nach Anspruch 5, **dadurch gekennzeichnet, dass** das Sicherungsorgan (6) in der Sicherungsstellung die Einführöffnung (3) wenigstens abschnittsweise verschließt.

7. Fliehkraftverriegelungselement (1) nach Anspruch 5 oder 6, **dadurch gekennzeichnet, dass** das Sicherungsorgan (6) eine Aussparung (6b) mit einem Innenprofil (6c) aufweist, das wenigstens abschnittsweise einem Innenprofil (3a) der Einführöffnung (3) entspricht und in der Befestigungsstellung mit dem Innenprofil (3a) der Einführöffnung (3) fluchtet.

8. Fliehkraftverriegelungselement (1) nach einem der Ansprüche 1 bis 7, **dadurch gekennzeichnet, dass** das Sicherungsorgan (6) in einer Bewegungsrichtung (W) von der Befestigungs- in die Sicherungsstellung beweglich angeordnet ist, wobei die Bewegungsrichtung (W) in die im Wesentlichen quer zu einer Arretierrichtung (X) verläuft, in welcher das Sicherungsorgan (6) eine Bewegung des Anschlussgliedes (2) sperrt.

9. Fliehkraftverriegelungselement (1) nach einem der Ansprüche 1 bis 8, **dadurch gekennzeichnet, dass** das Befestigungsorgan (5) hakenartig ausgestaltet ist.

10. Fliehkraftverriegelungselement (1) nach einem der Ansprüche 1 bis 9, **dadurch gekennzeichnet, dass** die Einführöffnung (3) in einen Verschiebeschlitz (5b) mündet, wobei die Einführöffnung (3) gegenüber dem Verschiebeschlitz (5b) erweitert ist und ein Abschnitt des Verschiebeschlitzes (5b) als sich zur Einführöffnung (3) erstreckende Ausgleichsstrecke (A) ausgestaltet ist.

11. Fliehkraftverriegelungselement (1) nach einem der Ansprüche 1 bis 10, **dadurch gekennzeichnet, dass** das Sicherungsorgan (6) in der Sicherungsstellung einen die Ausgleichsstrecke (A) begrenzenden Anschlag bildet.

12. Fliehkraftverriegelungselement (1) nach einem der Ansprüche 1 bis 11, **dadurch gekennzeichnet, dass** das Fliehkraftverriegelungselement (1) zur Befestigung einer Gleitschutzvorrichtung (11) an einem Fahrzeugrad (7) ausgestaltet ist und der Abstand zweischen dem der Radachse (R) zugewandtem Ende einer Ausgleichsstrecke (A) und einer Radachse (R) dem Lochkreisradius der Felgenbefestigung (10) entspricht.

## Claims

1. Centrifugal locking element (1) for anti-skid devices or revolving chains such as tyre chains or conveyor chains, comprising a carrier (1 a) which comprises at least one fastening member (5) for fastening at least one connecting member (2), and comprising a movable securing member (6) which is attached to the carrier (1a) and can be moved from a fastening position, in which the connecting member (2) can be fastened to the fastening member (5), to a securing position, in which the connecting member (2) is non-detachable after having been fastened to the fastening member (5), **characterised in that** the securing member (6) is configured in such a way as to be able to be moved automatically from the fastening position to the securing position by means of centrifugal forces (F) which occur during use of the centrifugal locking element (1).

2. Centrifugal locking element (1) according to claim 1, **characterised in that** the securing member (6) is rotatably fastened to the centrifugal locking element (1).

3. Centrifugal locking element (1) according to claim 1 or 2, **characterised in that**, in the securing position, an axis of rotation (D) of the securing member (6) is arranged between the centre of gravity (S) of the securing member (6) and an instantaneous centre of rotation (P₁) of the centrifugal locking element (1).

4. Centrifugal locking element (1) according to one of claims 1 to 3, **characterised in that**, in the fastening position, the centre of gravity (S) is arranged between its position in the securing position and the instantaneous centre of rotation (P₁).

5. Centrifugal locking element (1) according to one of claims 1 to 4, **characterised in that** the fastening member (5) has an insertion opening (3) for receiving the connecting member (2).

6. Centrifugal locking element (1) according to claim 5, **characterised in that** the securing member (6), in the securing position, at least partially closes the insertion opening (3).

7. Centrifugal locking element (1) according to claim 5 or 6, **characterised in that** the securing member (6) has a recess (6b) with an internal profile (6c) which at least partially corresponds to an internal profile (3a) of the insertion opening (3) and is aligned with the internal profile (3a) of the insertion opening (3) in the fastening position.

8. Centrifugal locking element (1) according to one of claims 1 to 7, **characterised in that** the securing member (6) is arranged such as to be movable from the fastening position to the securing position in a movement direction (W), wherein the movement direction (W) runs substantially transversely to an arresting direction (X) in which the securing member (6) blocks a movement of the connecting member (2).

9. Centrifugal locking element (1) according to one of claims 1 to 8, **characterised in that** the fastening member (5) is of hook-like configuration.

10. Centrifugal locking element (1) according to one of claims 1 to 9, **characterised in that** the insertion opening (3) opens into a displacement slot (5b), wherein the insertion opening (3) is wider than the displacement slot (5b) and a portion of the displacement slot (5b) is configured as a compensating section (A) which extends towards the insertion opening (3).

11. Centrifugal locking element (1) according to one of claims 1 to 10, **characterised in that** the securing member (6) forms in the securing position a stop which limits the compensating section (A).

12. Centrifugal locking element (1) according to one of claims 1 to 11, **characterised in that** the centrifugal locking element (1) is configured to fasten an anti-skid device (11) to a vehicle wheel (7) and the distance between the end of a compensating section (A) facing towards the wheel axis (R) and a wheel axis (R) corresponds to the hole circle radius of the rim fastening (10).

## Revendications

1. Dispositif de verrouillage à force centrifuge (1) pour dispositifs antidérapants ou chaînes circulaires telles que des chaînes pour pneus ou des chaînes de transport, avec un support (1a) qui comprend au moins un organe de fixation (5) pour la fixation d'au moins un organe de liaison (2), et un organe de blocage (6) mobile qui est monté sur le support (1a) et qui est apte à passer d'une position de fixation dans laquelle l'organe de liaison (2) est apte à être fixé à l'organe de fixation (5), à une position de blocage dans laquelle l'organe de liaison (2) est imperdable, une fois fixé à l'organe de fixation (5), **caractérisé en ce que** l'organe de blocage (6) est conçu pour pouvoir passer tout seul de la position de fixation à la position de blocage grâce aux forces centrifuges (F) qui apparaissent pendant l'utilisation de l'élément de verrouillage à force centrifuge (1).

2. Elément de verrouillage à force centrifuge (1) selon la revendication 1, **caractérisé en ce que** l'organe de blocage (6) est fixé en rotation à l'élément de verrouillage à force centrifuge (1).

3. Elément de verrouillage à force centrifuge (1) selon la revendication 1 ou 2, **caractérisé en ce que** dans la position de blocage, un axe de rotation (D) de l'organe de blocage (6) est disposé entre le centre de gravité (S) de l'organe de blocage (6) et un centre instantané de rotation (P₁) de l'élément de verrouillage à force centrifuge (1).

4. Elément de verrouillage à force centrifuge (1) selon l'une des revendications 1 à 3, **caractérisé en ce que** dans la position de fixation, le centre de gravité (S) est disposé entre sa position dans la position de blocage, et le centre instantané de rotation (P₁).

5. Elément de verrouillage à force centrifuge (1) selon l'une des revendications 1 à 4, **caractérisé en ce que** l'organe de fixation (2) présente une ouverture d'introduction (3) pour recevoir l'organe de liaison (2).

6. Elément de verrouillage à force centrifuge (1) selon la revendication 5, **caractérisé en ce que** l'organe de blocage (6), dans la position de blocage, ferme au moins par zones l'ouverture d'introduction (3).

7. Elément de verrouillage à force centrifuge (1) selon la revendication 5 ou 6, **caractérisé en ce que** l'organe de blocage (6) présente un évidement (6b) avec un profil intérieur (6c) qui correspond au moins par zones à un profil intérieur (3a) de l'ouverture d'introduction (3) et qui, dans la position de fixation, est dans l'alignement dudit profil intérieur (3a) de l'ouverture d'introduction (3).

8. Elément de verrouillage à force centrifuge (1) selon l'une des revendications 1 à 7, **caractérisé en ce que** l'organe de blocage (6) est disposé mobile dans un sens de déplacement (W) pour passer de la position de fixation à la position de blocage, le sens de déplacement (W) s'étendant globalement transversalement par rapport à un sens d'arrêt (X) dans lequel l'organe de blocage (6) empêche un déplacement de l'organe de liaison (2).

9. Elément de verrouillage à force centrifuge (1) selon l'une des revendications 1 à 8, **caractérisé en ce que** l'organe de fixation (5) a la forme d'un crochet.

10. Elément de verrouillage à force centrifuge (1) selon l'une des revendications 1 à 9, **caractérisé en ce que** l'ouverture d'introduction (3) débouche dans une fente de coulissement (5b), l'ouverture d'introduction (3) étant élargie par rapport à la fente de coulissement ( 5b) et un tronçon de la fente de coulissement (5b) étant conçu comme une distance de compensation (A) qui s'étend vers l'ouverture d'introduction (3).

11. Elément de verrouillage à force centrifuge (1) selon l'une des revendications 1 à 10, **caractérisé en ce que** l'organe de blocage (6), dans la position de blocage, forme une butée qui limite la distance de compensation (A).

12. Elément de verrouillage à force centrifuge (1) selon l'une des revendications 1 à 11, **caractérisé en ce qu'**il est conçu pour la fixation d'un dispositif antidérapant (11) à une roue de véhicule (7), et l'écartement entre l'extrémité d'une distance de compensation (A) tournée vers l'essieu (R) et un essieu (R) correspond au rayon du trou de la fixation de moyeu (10).
